# EUROPEAN PATENT APPLICATION

(11) **EP 1 908 958 A2**
(43) Date of publication of application: **09.04.2008**
(21) Application number: 07253185.8
(22) Date of filing: 14.08.2007
(51) Int. Cl.: F04C 23/00, F04C 18/356, F25B 3/00

(54) **Rotary compressor and heat pump system**

(30) Priority: 29.09.2006 JP 2006266429; 11.05.2007 JP 2007126573
(71) Applicant: FUJITSU GENERAL LIMITED, Kawasaki-shi, Kanagawa-ken (JP)
(72) Inventor: Morishita, Taku, Fujitsu General Limited, Kawasaki-shi, Kanagawa-ken (JP); Morozumi, Naoya, Fujitsu General Limited, Kawasaki-shi, Kanagawa-ken (JP); Ueda, Kenshi, Fujitsu General Limited, Kawasaki-shi, Kanagawa-ken (JP)
(74) Representative: Hallybone, Huw George

(57) **Abstract**

A problem to be solved by the present invention is that the temperature of a refrigerant discharged from a compression section can be detected more exactly without being influenced by variable factors existing around the compression section. In a rotary compressor 1 having a motor 6 and a compression section 3 provided in a closed container 2, and also having a discharge pipe 26 provided in an upper part of the closed container 2 to discharge a refrigerant compressed by the compression section 3 to the outside of the closed container 2, a refrigerant discharge part 462 for discharging the refrigerant compressed by the compression section 3 toward the inner peripheral surface of the closed container 2 is provided, and a discharge temperature sensor 20 for detecting the discharge temperature of compressed refrigerant is arranged in a portion opposed to the refrigerant discharge part 462 on the outer peripheral surface side of the closed container 2.

## Description

### TECHNICAL FIELD

The present invention relates to a rotary compressor used for air conditioners and water heaters. More particularly, it relates to a technique used to control the capacity of a heat pump system and to ensure the reliability of a compressor by exactly detecting the discharge temperature of a refrigerant compressed by a compression section.

### BACKGROUND ART

The compressor used for the refrigeration cycle of a heat pump system has a problem in that if the degree of superheat of the intake refrigerant thereof is too high, the density of intake refrigerant decreases, so that the capacity and efficiency of compressor decreases, and a problem in that the temperature of the whole of the compressor rises, so that the reliability of compressor, especially the durability of motor winding and insulating paper, decreases.

On the other hand, if the intake refrigerant is not in a superheated state but in a wet state, that is, in a state in which the ratio of liquid is high, the lubricating oil in the compression section is diluted by a liquid refrigerant, resulting in poor lubrication. If the ratio of liquid increases further, the intake refrigerator becomes in a liquid compression state, which presents a problem in that an abnormal rise in pressure leads to damage of compression section.

Therefore, in order to properly control the capacity of heat pump system and to ensure the reliability of compressor, it is necessary to properly keep the state of refrigerant in the refrigeration system in the heat pump system, especially the degree of superheat of the intake refrigerant of compressor.

If the intake refrigerant in the compressor is in a wet state, that is, in a two-phase state, the temperature of intake refrigerant in the compressor does not change regardless of the ratio of liquid. Generally, therefore, the temperature of discharge refrigerant after being compressed is detected, by which the intake state is estimated from the fact that the compression is substantially in an adiabatic process.

Thereupon, for example, in Patent Document 1 (Japanese Patent Application Publication No. 2005-147437), a discharge temperature sensor is provided in the discharge pipe of compressor. Also, in Patent Document 2 (Japanese Patent Application Publication No. H07-174417), a discharge temperature sensor is provided within the compressor, the degree of superheat of intake refrigerant in the compressor is estimated by using the detected discharge refrigerant temperature of compressor as one piece of information, and to make the degree of superheat in a proper state, the throttle amount of an expansion valve, the number of revolutions of the compressor, and the number of revolutions of a fan of a condenser or an evaporator are controlled.

However, the mode in which the discharge temperature sensor is provided in the discharge pipe above the compressor as in Patent Document 1 has problems described below.

The compression section of a general hermetic rotary compressor is arranged in a lower part of a closed container, and therefore the refrigerant discharged from the compression section passes through the surroundings of the motor arranged in an upper part of the closed container and is discharged to the outside of the closed container through the discharge pipe in an upper part.

Therefore, the compressor of this type has both of a cause for the rise in temperature due to absorption of loss heat of motor during the time from when the refrigerant is discharged from the compression section to when it reaches the discharge pipe and a cause for the fall in temperature due to heat release from the compressor to the surroundings thereof, so that the temperature detected in the discharge pipe in the upper part of the compressor differs from the temperature immediately after the discharge from the compression section.

In addition, in a transient state such as the start time, depending on the heat capacity of motor, the temperature detected in the discharge pipe in the upper part of the compressor differs greatly from the temperature immediately after the discharge from the compression section. Therefore, this method is insufficient for detecting exact temperature immediately after the discharge from the compression section, which is necessary for estimating the degree of superheat of intake refrigerant, so that this method must be improved.

Also, in the mode in which the discharge temperature sensor is provided within the compressor as in Patent Document 2, since the signal of the discharge temperature sensor is taken out to the outside, a pressure-tight junction terminal must be provided in the closed container of compressor, which leads to an increase in cost, so that this method must be improved.

Further, in the gas injection cycle in the refrigeration cycle, for the injection refrigerant sucked into the compressor as well, it is necessary to properly keep the degree of superheat or the dryness in the compressor intake state.

The injection refrigerant is generally sucked into the compressor without passing through an accumulator. Therefore, to properly keep the degree of superheat or the dryness in the compressor intake state of the injection refrigerant, it is necessary to more exactly detect the discharge temperature of compressor.

Therefore, a problem to be solved by the present invention is that in a rotary compressor in which a motor and a compression section are contained in a closed container, the temperature of a refrigerant discharged from the compression section can be detected more exactly without being influenced by variable factors existing around the compression section, by which the capacity of a heat pump system is controlled properly, and the reliability of compressor is ensured.

### SUMMARY OF THE INVENTION

To solve the above problem, the present invention provides a closed rotary compressor of what is called an interior high pressure type, that is, a type in which the compressor has a motor provided in an upper part of a cylindrical closed container and a compression section provided in a lower part thereof, and a refrigerant compressed by the compression section is discharged to the outside through a discharge pipe provided in an upper end part of the closed container after passing through the interior of the closed container, wherein a muffler chamber is provided on the upper side of the compression section to reduce pressure pulsation of refrigerant discharged from the compression section, and to detect the temperature of compressed refrigerant near an upper muffler discharge hole for discharging the refrigerant from the muffler chamber into the closed container, a discharge temperature sensor for detecting the temperature of compressed refrigerant is provided on the outer peripheral surface of the closed container approximately at the height at which the upper muffler discharge hole is positioned.

As a preferable mode of the present invention, an upper muffler cover has a horizontal end plate part, a vertical side plate part, and the upper muffler discharge hole which is provided in the side plate part and is open toward the inner peripheral surface of the closed container; and a discharge temperature sensor for detecting the temperature of compressed refrigerant is provided on the outer peripheral surface of the closed container opposed to the upper muffler discharge hole.

The upper muffler cover has a horizontal end plate part, a vertical side plate part, and a cut and raised part which is provided in the end plate part and is open toward the inner peripheral surface of the closed container as an upper muffler discharge hole; and a discharge temperature sensor for detecting the temperature of compressed refrigerant is provided on the outer peripheral surface of the closed container opposed to the upper muffler discharge hole.

The upper muffler cover has an upper muffler pipe which is fixed to the upper muffler cover and one end of which is open to an upper muffler chamber and the other end of which is open toward the inner peripheral surface of the closed container as an upper muffler discharge hole; and a discharge temperature sensor for detecting the temperature of compressed refrigerant is provided on the outer peripheral surface of the closed container opposed to the upper muffler discharge hole.

The upper muffler cover has a horizontal end plate part, a vertical side plate part, a projecting part provided in the side plate part so as to be close to the inner peripheral surface of the closed container, and an upper muffler discharge hole which is provided in the projecting part and is open toward the inner peripheral surface of the closed container; and a discharge temperature sensor for detecting the temperature of compressed refrigerant is provided on the outer peripheral surface of the closed container opposed to the upper muffler discharge hole.

The end plate part of the upper bearing has a bearing end plate discharge passage one end of which is open to the upper muffler chamber and the other end of which is open toward the inner peripheral surface of the closed container as an upper muffler discharge hole; and a discharge temperature sensor for detecting the temperature of compressed refrigerant is provided on the outer peripheral surface of the closed container opposed to the upper muffler discharge hole.

On the other hand, the present invention is preferably applied to a rotary compressor in which the number of revolutions is variable.

Also, the present invention is preferably applied to a two-stage compression rotary compressor in which the compression section has a low stage side compression section arranged on the lower side, a high stage side compression section arranged on the upper side, a two-stage compression section being formed by connecting the discharge side of the low stage side compression section to the suction side of the high stage side compression section by an intermediate interconnection passage; and the compression section also has a low-pressure suction pipe connected to the suction side of the low stage side compression section, and an intermediate-pressure suction pipe connected to the suction side of the high stage side compression section via the intermediate interconnection passage.

Further, the present invention embraces any mode described below as a heat pump system using the rotary compressor in accordance with the present invention.

A heat pump system including a refrigeration cycle in which a compressor, a condenser, an expansion mechanism, and an evaporator are connected in succession by a line; and a control unit which detects the temperatures of a plurality of locations of the refrigeration cycle and controls the number of revolutions of the compressor and the throttle amount of the expansion mechanism, wherein the rotary compressor described in any one of claims 1 to 7 is used as the compressor; and based on the temperature detected by a discharge temperature sensor provided on the outer peripheral surface of a closed container of the compressor, the throttle amount of the expansion mechanism and the number of revolutions of the compressor are controlled, and the degree of superheat of a refrigerant sucked into the compressor is kept proper.

A heat pump system provided with a gas injection cycle, which includes a basic refrigeration cycle in which a compressor, a condenser, a basic cycle expansion mechanism, and an evaporator are connected in succession by a line; a branch pipe which branches some of a high-pressure refrigerant behind the outlet of the condenser from the basic refrigeration cycle as an injection refrigerant; an injection expansion mechanism which decompresses the injection refrigerant to an intermediate pressure between the pressure of the condenser and the pressure of the evaporator; an internal heat exchanger which heat-exchanges the decompressed injection refrigerant with the branched high-pressure refrigerant of basic refrigeration cycle; an injection line which sucks the injection refrigerant, having been subjected to the heat exchange, during the compression process of the compressor; and a control unit which detects the temperatures of a plurality of locations of the refrigeration cycle and controls the number of revolutions of the compressor, the throttle amount of the basic cycle expansion mechanism, and the throttle amount of the injection expansion mechanism, wherein the rotary compressor described in claim 8 is used as the compressor, the discharge pipe of the compressor is connected to the condenser, the low-pressure suction pipe of the compressor is connected to the evaporator, and the intermediate-pressure suction pipe of the compressor is connected to the injection line; and based on the temperature detected by a discharge temperature sensor provided on the outer peripheral surface of a closed container of the compressor, the throttle amount of the injection expansion mechanism and the number of revolutions of the compressor are controlled, and the degree of superheat or the dryness of a refrigerant sucked into the intermediate-pressure suction pipe of the compressor is kept proper.

A heat pump system provided with a gas injection cycle, which includes a basic refrigeration cycle configured by connecting a compressor, a condenser, a first expansion mechanism, an intermediate-pressure gas-liquid separator, a second expansion mechanism, and an evaporator in succession by a line; an injection pipe which branches a gas refrigerant separated by the intermediate-pressure gas-liquid separator from the basic refrigeration cycle as an injection refrigerant and sucks the injection refrigerant during the compression process of the compressor; and a control unit which detects the temperatures of a plurality of locations of the refrigeration cycle and controls the number of revolutions of the compressor, the throttle amount of the first expansion mechanism, and the throttle amount of the second expansion mechanism, wherein the rotary compressor described in claim 8 is used as the compressor, the discharge pipe of the compressor is connected to the condenser, the low-pressure suction pipe of the compressor is connected to the evaporator, and the intermediate-pressure suction pipe of the compressor is connected to the injection line; and based on the temperature detected by a discharge temperature sensor provided on the outer peripheral surface of a closed container of the compressor, the throttle amount of the first expansion mechanism, the throttle amount of the second expansion mechanism, and the number of revolutions of the compressor are controlled, and the degree of superheat or the dryness of a refrigerant sucked into the intermediate-pressure suction pipe of the compressor is kept proper.

According to the present invention, in the rotary compressor in which the motor and the compression section are contained in the closed container, the temperature of refrigerant discharged from the compression section can be detected more exactly without being influenced by variable factors, such as the motor, existing around the compression section.

Thereby, the state of refrigerant sucked into the compressor, that is, the degree of superheat or the dryness thereof can be estimated more exactly, and therefore the capacity of heat pump system can be controlled and the reliability of compressor can be ensured at a low cost.

Also, in a speed variable compressor, in the case where the required capacity as a heat pump system is low and the number of revolutions is small, that is, in the case where the refrigerant circulating amount is small, the change in temperature caused by an influence of the surroundings from immediately after the discharge from the compression section to the discharge pipe in the upper part of the compressor is large, so that the effect of the present invention increases.

Further, according to the present invention, in the gas injection cycle, the degree of superheat or the dryness of injection refrigerant sucked into the compressor can be kept proper.

### BRIEF DESCRIPTION OF THE DRAWINGS

FIG. 1A is a general sectional view of a rotary compressor in accordance with a first embodiment of the present invention;
FIG. 1B is a transverse sectional view of a compression section of a rotary compressor in accordance with a first embodiment of the present invention;
FIG. 1C is a configuration diagram of a refrigeration cycle in accordance with a first embodiment of the present invention;
FIG. 2 is a partial sectional view of a lower part of a rotary compressor in accordance with a second embodiment of the present invention;
FIG. 3A is a perspective view of an upper muffler cover of a rotary compressor in accordance with a third embodiment of the present invention;
FIG. 3B is a partial sectional view of a lower part of a rotary compressor in accordance with a third embodiment of the present invention;
FIG. 4 is a partial sectional view of a lower part of a rotary compressor in accordance with a fourth embodiment of the present invention;
FIG. 5A is a perspective view of an upper muffler cover of a rotary compressor in accordance with a fifth embodiment of the present invention;
FIG. 5B is a partial sectional view of a lower part of a rotary compressor in accordance with a fifth embodiment of the present invention;
FIG. 6 is a partial sectional view of a lower part of a rotary compressor in accordance with a sixth embodiment of the present invention;
FIG. 7A is a general sectional view of a rotary compressor in accordance with a seventh embodiment of the present invention;
FIG. 7B is a configuration diagram of a refrigeration cycle in accordance with a seventh embodiment of the present invention; and
FIG. 8 is a configuration diagram of a refrigeration cycle in accordance with an eighth embodiment of the present invention.

### DETAILED DESCRIPTION

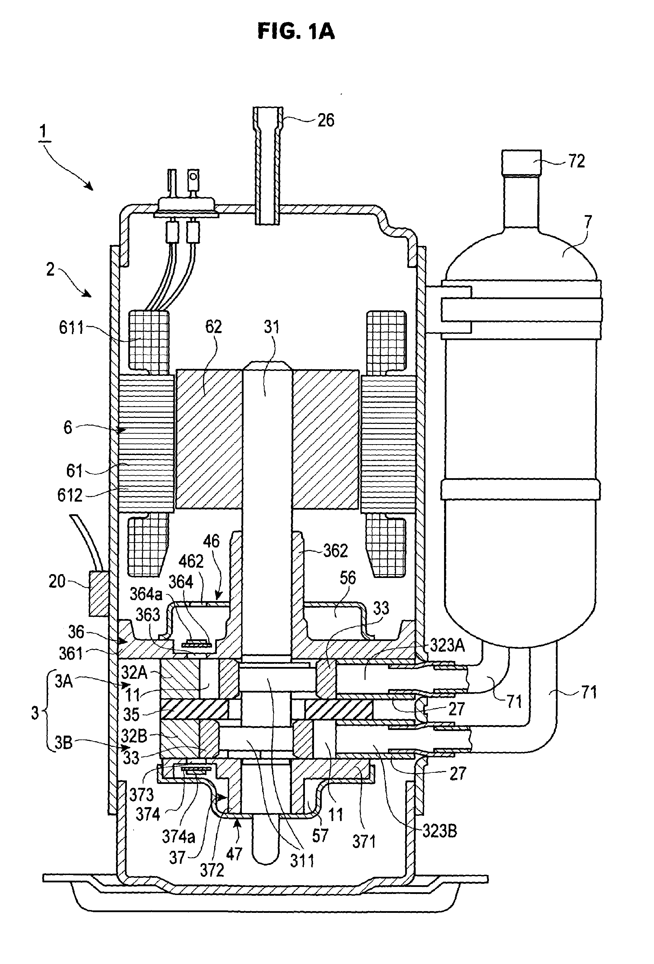

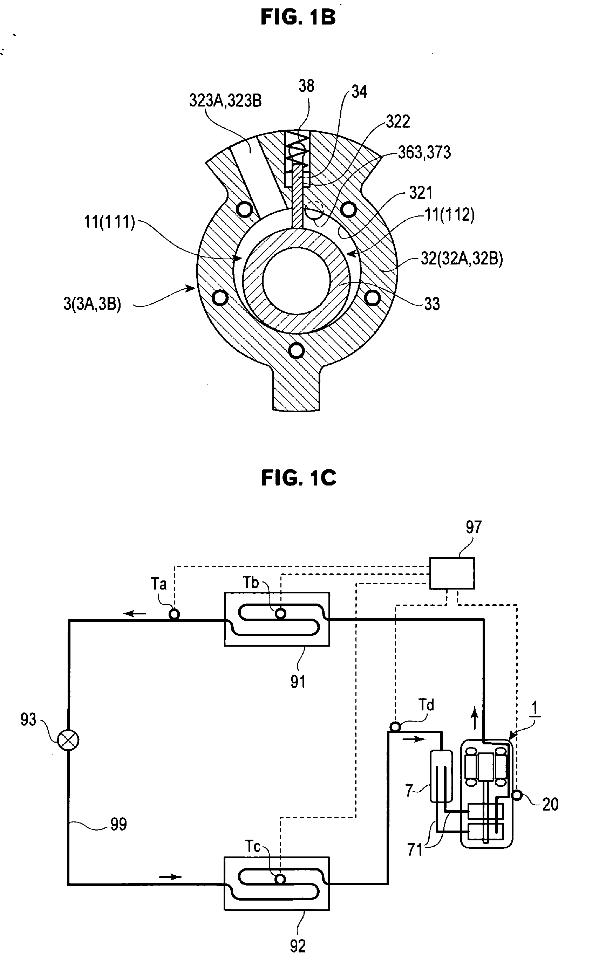

First, a first embodiment of the present invention will be described with reference to FIGS 1A to 1C. FIG. 1A is a general sectional view of a rotary compressor in accordance with the first embodiment of the present invention, FIG. 1B is a transverse sectional view of the compression section of the rotary compressor in accordance with the first embodiment of the present invention, and FIG. 1C is a configuration diagram of a refrigeration cycle in accordance with the first embodiment of the present invention.

As shown in FIG. 1A, a rotary compressor 1 is configured so that a cylindrical closed container 2 is arranged in the vertical direction, and a motor 6 and a compression section 3 are provided in an upper part and a lower part of the closed container, respectively. In this embodiment, the compression section 3 is a two-cylinder type rotary compressor having a first compression section 3A and a second compression section 3B.

In an upper end part of the closed container 2, there is provided a discharge pipe 26 for discharging a refrigerant discharged from the compression section 3 into the closed container to the outside of the closed container. A stator 61 of the motor 6 is shrinkage fitted in the closed container 2, and a rotor 62 of the motor 6 is shrinkage fitted on a shaft 31 that mechanically connects the motor 6 to the compression section 3.

As shown in FIG. 1B, the compression section 3 has a cylinder 32 and a cylindrical piston 33 housed in a cylindrical cylinder bore 321 formed on the inside of the cylinder 32, and a working chamber 11 for the refrigerant is formed between the inner peripheral surface of the cylinder bore 321 and the outer peripheral surface of the piston 33. The cylinder 32 is provided with a vane groove 322 extending from the cylinder bore 321 toward the outer periphery of the cylinder 32, and a flat plate-shaped vane 34 is provided in the vane groove 322.

Between the vane 34 and the inner peripheral surface of the closed container 2, a spring 38 is provided so that the tip end of the vane 34 is brought into sliding contact with the outer peripheral surface of the piston 33 by an urging force of the spring 38, and thereby the working chamber 11 is partitioned into a suction chamber 111 and a compression chamber 112.

The upper first compression section 3A and the lower compression section 3B of the compression section 3 have the same basic configuration except that the pistons 33 are out of phase by 180° . Next, referring again to FIG. 1A, the whole of the compressor 1 is explained.

The compression section 3 has a first cylinder 32A corresponding to the first compression section 3A, a second cylinder 32B corresponding to the second compression section 3B, an upper bearing 36 provided on the upper side of the first cylinder 32A, a lower bearing 37 provided on the lower side of the second cylinder 32B, and an intermediate partitioning plate 35 provided between the first cylinder 32A and the second cylinder 32B, so that the upper and lower sides of the working chambers 11 of the two compression sections 3A and 3B are closed by an end plate part 361 of the upper bearing 36, the intermediate partitioning plate 35, and an end plate part 371 of the lower bearing.

On the upper side of the upper bearing 36 and on the lower side of the lower bearing, an upper muffler cover 46 and a lower muffler cover 47 are provided, respectively, and an upper muffler chamber 56 and a lower muffler chamber 57 are formed to reduce pressure pulsation of the discharged refrigerant.

The upper muffler cover 46, the upper bearing 36, the first cylinder 32A, the intermediate partitioning plate 35, the second cylinder 32B, the lower bearing 37, and the lower muffler cover 47 are fixed integrally with bolts (not shown), and further the outer peripheral part of the upper bearing end plate part 361 is fixed to the closed container 2 by spot welding.

The upper bearing 36 and the lower bearing 37 have bearing parts 362 and 372, respectively. By fitting the shaft 31 in the bearing parts 362 and 372, the shaft 31 is rotatably supported.

The shaft 31 has two crank parts 311 a and 311b that are off-center in the 180° different direction, and the two crank parts 311a and 311b fit in the pistons 33 in the first compression section 3A and the second compression section 3B, respectively.

As the shaft 31 rotates, the piston 33 revolves while making sliding contact with the inner wall of the cylinder bore 321. Accordingly, the vane 34 reciprocates following the revolution of the piston 33, by which the volumes of the suction chamber 111 and the compression chamber 112 are changed continuously.

The suction chamber 111 of the first compression section 3A is connected to a low-pressure suction pipe 71 via a suction hole 323A provided in the first cylinder 32A, and the compression chamber 112 of the first compression section 3A communicates with the upper muffler chamber 56 via a compression section discharge hole 363 provided in the upper bearing end plate part 361.

More specifically, the low-pressure suction pipe 71 is connected to the suction hole 323A via a suction connection pipe 27, and a check valve 364 is provided in the compression section discharge hole 363.

The suction chamber 111 on the suction side of the second compression section 3B is connected to a low-pressure suction pipe 71 via a suction hole 323B provided in the second cylinder 32B, and the compression chamber 112 of the second compression section 3B communicates with the lower muffler chamber 57 via a compression section discharge hole 373 provided in the lower bearing end plate part 371.

More specifically, the low-pressure suction pipe 71 is connected to the suction hole 323B via a suction connection pipe 27, and a check valve 374 is provided in the compression section discharge hole 373.

The check valves 364 and 374 are additionally provided with valve guards 364a and 374a, respectively. FIG. 1A shows a state in which the check valves 364 and 374 are opened and are in contact with the valve guards 364a and 374a, respectively.

In the upper bearing end plate part 361, the first cylinder 32A, the intermediate partitioning plate 35, the second cylinder 32B, and the lower bearing end plate part 371, a muffler chamber communication hole (not shown) that passes through these elements continuously to cause the upper muffler chamber 56 and the lower muffler chamber 57 to communicate with each other is provided.

In the upper muffler cover 46, an upper muffler discharge hole 462 that opens to the interior of the closed container 2 is provided, and a discharge temperature sensor 20 is mounted on the outer peripheral surface of the closed container 2 approximately at the height of the upper muffler discharge hole 462.

At the side of the compressor 1, an accumulator 7 consisting of an independent closed vessel is provided. At an upper part of the accumulator 7, an accumulator inlet pipe 72 connecting with the low-pressure side of a refrigeration cycle is provided, and at lower parts of the accumulator 7, the two low-pressure suction pipes 71 that connect the interior of the accumulator 7 to the suction chambers 111 of the first compression section 3A and the second compression section 3B are provided.

The accumulator 7 is used to prevent a liquid refrigerant from being sucked into the compressor in the case where the liquid refrigerant is mixed in an intake refrigerant in a transient state such as the start time of compressor. The explanation of the internal construction of the accumulator 7 is omitted because the internal construction thereof does not relate directly to the present invention.

Next, the flow of refrigerant in the compressor configured as described above is explained. A refrigerant flowing from the low-pressure side (evaporator side) of the refrigeration cycle into the accumulator 7 through the accumulator inlet pipe 72 is sucked into the suction chambers 111 of the first compression section 3A and the second compression section 3B of the compressor 1 through the low-pressure suction pipes 71, since the piston 33 revolves and thus the volume of the suction chamber 111 increases.

After one turn, the suction chamber 111 is located at a position at which it is isolated from the suction hole 323, and is changed over to the compression chamber 112 as it is, by which the refrigerant is compressed.

When the pressure of the compressed refrigerant reaches the pressure in the closed container 2 on the outside of the check valves 364 and 374 provided in the compression section discharge holes 363 and 373, respectively, as shown in FIG. 1A, the check valves 364 and 374 are opened, and the refrigerant is discharged into the upper muffler chamber 56 and the lower muffler chamber 57.

The refrigerant discharged into the lower muffler chamber 57 reduces the pressure pulsation, which may cause noise, in the lower muffler chamber 57, and then flows into the upper muffler chamber 56 through the muffler chamber communication hole (not shown), joining to the refrigerant discharged from the first compression section 3A.

The joined refrigerant reduces the pressure pulsation, which may cause noise, in the upper muffler chamber 56, and then is discharged into the closed container 2 through the upper muffler discharge hole 462.

Further, the refrigerant is introduced into a space above the motor 6 after passing through a notch portion (not shown) of a stator core 612 of the motor 6, a gap between the stator core 612 and a winding 611, and a gap between the stator 61 and the rotor 62, and is discharged to a high-pressure side (condenser side) of the refrigeration cycle through the discharge pipe 26.

As described above, the refrigerant compressed in the first compression section 3A and the second compression section 3B is discharged into the closed container 2 after passing through the upper muffler chamber 56, and is discharged to the outside of the closed container 2 through the discharge pipe 26 after passing through the surroundings of the motor 6.

As shown in FIG. 1C, the refrigeration cycle is formed by connecting the compressor 1, a condenser 91, a basic cycle expansion mechanism 93, and an evaporator 92 in succession by using a line 99. In FIG. 1C, reference symbol Ta denotes a temperature sensor for detecting the refrigerant temperature on the outlet side of the condenser 91, Tb denotes a temperature sensor for detecting the refrigerant temperature at an intermediate position in the condenser 91, Tc denotes a temperature sensor for detecting the refrigerant temperature at an intermediate position in the evaporator 92, and Td denotes a sensor for detecting the temperature of intake refrigerant.

The high temperature and pressure gas refrigerant discharged from the compressor 1 is heat-exchanged with air in the condenser 91 to release heat, and becomes in a supercooled state. The refrigerant in the supercooled state is decompressed in the basic cycle expansion mechanism 93 and becomes in a low temperature and pressure two-phase state. The refrigerant in the low temperature and pressure two-phase state is heat-exchanged with air in the evaporator 92 to absorb heat and to be gasified, that is, becomes in a state having a degree of superheat, and is sucked into the compressor 1.

In the case where the evaporator 92 is arranged in an indoor unit, the indoor air is cooled, so that the heat pump system serves as a cooler, and in the case where the condenser 91 is arranged in an indoor unit, the indoor air is heated, so that the heat pump system serves as a heater. Though not shown in FIG. 1C, if a line and a selector valve for exchanging the evaporator and the condenser for each other are added, the heat pump system can be used as a cooling and heating machine. Also, if the condenser 91 is heat-exchanged with water for hot-water supply, the heat pump system serves as a water heater.

Also, the heat pump system of this embodiment is provided with a control unit 97 for keeping the refrigerant in the refrigeration cycle in a proper state.

The control unit 97 sends a signal for detecting at least condenser refrigerant temperature, evaporator refrigerant temperature, and compressor discharge temperature and controlling the throttle amount of the basic cycle expansion mechanism 93 and the number of revolutions of the compressor 1 to keep the refrigerant circulating amount of refrigeration cycle proper with respect to the capacity required in the heat pump system, and further to keep the state of refrigerant in the refrigeration cycle, that is, the degree of supercooling of refrigerant at the outlet of the condenser 91 in the refrigeration cycle and the degree of superheat of refrigerant in the low-pressure suction pipe 71 of the compressor 1 proper.

In the present invention, the discharge temperature sensor 20 is mounted on the outer peripheral surface of closed container opposed to a portion in which the refrigerant compressed in the closed container 2 of the compressor 1 comes into contact with the closed container 2 before passing through the surroundings of the motor 6, by which the refrigerant temperature before heat exchange with the motor 6, that is, immediately after the discharge from the compression section can be detected almost directly. Therefore, the throttle amount of the basic cycle expansion mechanism 93 and the number of revolutions of the compressor 1 can be controlled based on the detected temperature, and the degree of superheat of refrigerant in the low-pressure suction pipe 71 of the compressor 1 can be kept more proper.

Also, in a speed variable compressor, in the case where the required capacity as a heat pump system is low and the number of revolutions is small, that is, in the case where the refrigerant circulating amount is small, the change in temperature caused by an influence of the surroundings from immediately after the discharge from the compression section to the discharge pipe 26 in the upper part of the closed container 2 is large, so that the effect of the present invention increases.

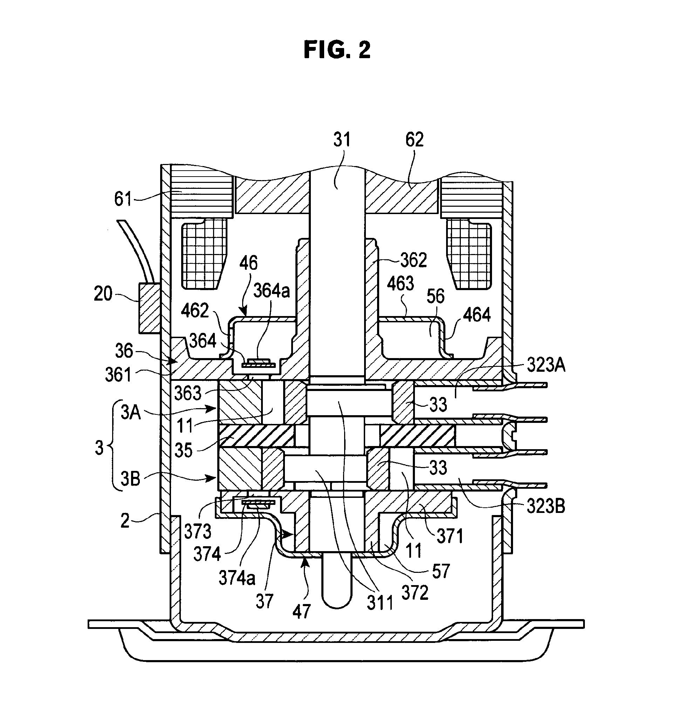

Next, a second embodiment of the present invention is explained with reference to FIG. 2. FIG. 2 is a partial sectional view of the lower part of a rotary compressor in accordance with the second embodiment of the present invention. In FIG. 2, the same reference symbols are applied to elements that are the same as those in FIG. 1A showing the first embodiment, and the detailed explanation thereof is omitted. The refrigeration cycle is the same as that in the first embodiment shown in FIG. 1C.

As shown in FIG. 2, the upper muffler cover 46 has an end plate part 463 and a side plate part 464, and an upper muffler discharge hole 462 is provided in the side plate part 464 so that the refrigerant discharged from the upper muffler chamber 56 is directly sprayed onto the inner peripheral surface of the closed container 2. Further, the discharge temperature sensor 20 is mounted on the outer peripheral surface of the closed container 2 opposed to the sprayed portion.

Thereby, the difference between the closed container temperature in the portion in which the discharge temperature sensor 20 is mounted and the refrigerant temperature immediately after the discharge from the compression section can be made small as compared with the first embodiment, so that the degree of superheat of intake refrigerant can be kept proper with higher accuracy.

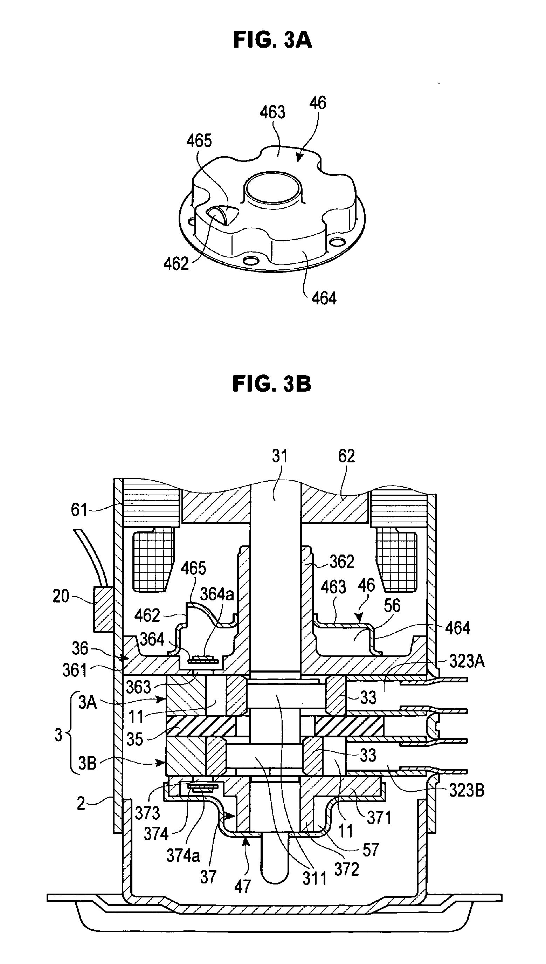

Next, a third embodiment of the present invention is explained with reference to FIGS. 3A and 3B. FIG. 3A is a perspective view of the upper muffler cover of a rotary compressor in accordance with the third embodiment of the present invention, and FIG. 3B is a partial sectional view of a lower part of the rotary compressor in accordance with the third embodiment of the present invention. In FIGS. 3A and 3B, the same reference symbols are applied to elements that are the same as those in FIG. 1A showing the first embodiment, and the detailed explanation thereof is omitted. The refrigeration cycle is the same as that in the first embodiment shown in FIG. 1C.

As shown in FIG. 3A, in the third embodiment, a cut and raised part 465 capable of being pressed simultaneously with the pressing of the whole of the upper muffler cover is provided in the end plate part 463 of the upper muffler cover 46.

As shown in FIG. 3B, the cut and raised part 465 is open toward the inner peripheral surface of the closed container 2 as the upper muffler discharge hole 462 so that the refrigerant discharged from the upper muffler chamber 56 is sprayed directly onto the inner peripheral surface of the closed container 2. Further, the discharge temperature sensor 20 is mounted on the outer peripheral surface of the closed container 2 opposed to the sprayed portion.

Thereby, the upper muffler discharge hole 462 that is open toward the inner surface of the closed container can be formed without separately fabricating the side plate part 464 of the upper muffler cover 46 as compared with the second embodiment, so that the degree of superheat of intake refrigerant can be kept proper with high accuracy at a lower cost.

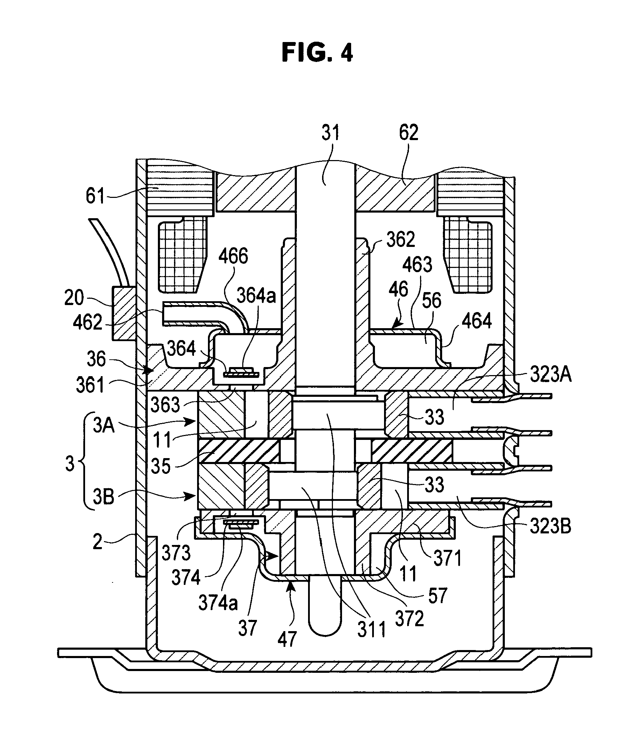

Next, a fourth embodiment of the present invention is explained with reference to FIG. 4. FIG. 4 is a partial sectional view of the lower part of a rotary compressor in accordance with the fourth embodiment of the present invention. In FIG. 4, the same reference symbols are applied to elements that are the same as those in FIG. 1A showing the first embodiment, and the detailed explanation thereof is omitted. The refrigeration cycle is the same as that in the first embodiment shown in FIG. 1C.

As shown in FIG. 4, in the fourth embodiment, an L-shaped upper muffler pipe 466 one end of which is open to the upper muffler chamber 56 and the other end of which is open toward the inner peripheral surface of the closed container 2 as the upper muffler discharge hole 462 is fixed to the end plate part 463 of the upper muffler cover 46 so that the refrigerant discharged from the upper muffler chamber 56 is sprayed directly onto the inner peripheral surface of the closed container 2. Further, the discharge temperature sensor 20 is mounted on the outer peripheral surface of the closed container 2 opposed to the sprayed portion.

Thereby, the upper muffler discharge hole 462 can be opened close to the inner peripheral surface of the closed container 2 as compared with the second and third embodiments, so that the degree of superheat of intake refrigerant can be kept proper with still higher accuracy.

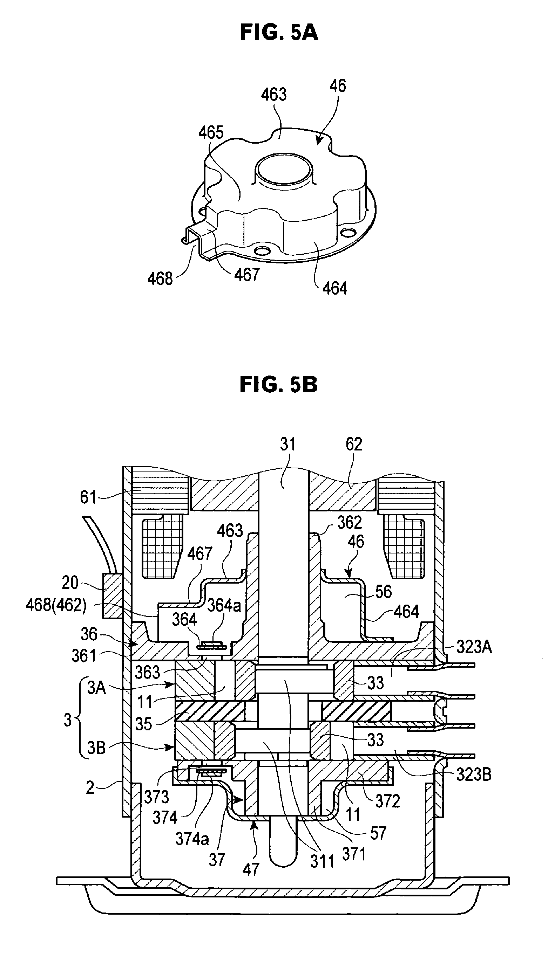

Next, a fifth embodiment of the present invention is explained with reference to FIGS. 5A and 5B. FIG. 5A is a perspective view of the upper muffler cover of a rotary compressor in accordance with the fifth embodiment of the present invention, and FIG. 5B is a partial sectional view of the lower part of the rotary compressor in accordance with the fifth embodiment of the present invention. In FIGS. 5A and 5B, the same reference symbols are applied to elements that are the same as those in FIG. 1A showing the first embodiment, and the detailed explanation thereof is omitted. The refrigeration cycle is the same as that in the first embodiment shown in FIG. 1C.

As shown in FIG. 5A, in the fifth embodiment, a projecting part 467 that is formed by bringing a part of the side plate part 464 of the upper muffler cover 46 close to the inner peripheral surface of the closed container 2 is provided, and further an opening 468 is provided in this projecting part 467.

As shown in FIG. 5B, the opening 468 in the projecting part is used as the upper muffler discharge hole 462 that is open toward the inner peripheral surface of the closed container 2 so that the refrigerant discharged from the upper muffler chamber 56 is sprayed directly onto the inner peripheral surface of the closed container 2. Further, the discharge temperature sensor 20 is mounted on the outer peripheral surface of the closed container 2 opposed to the sprayed portion.

Thereby, the upper muffler discharge hole 462 that is open close to the inner peripheral surface of the closed container 2 can be formed without attaching a separate pipe to the upper muffler cover 46 as compared with the fourth embodiment, so that the degree of superheat of intake refrigerant can be kept proper with far higher accuracy at a lower cost.

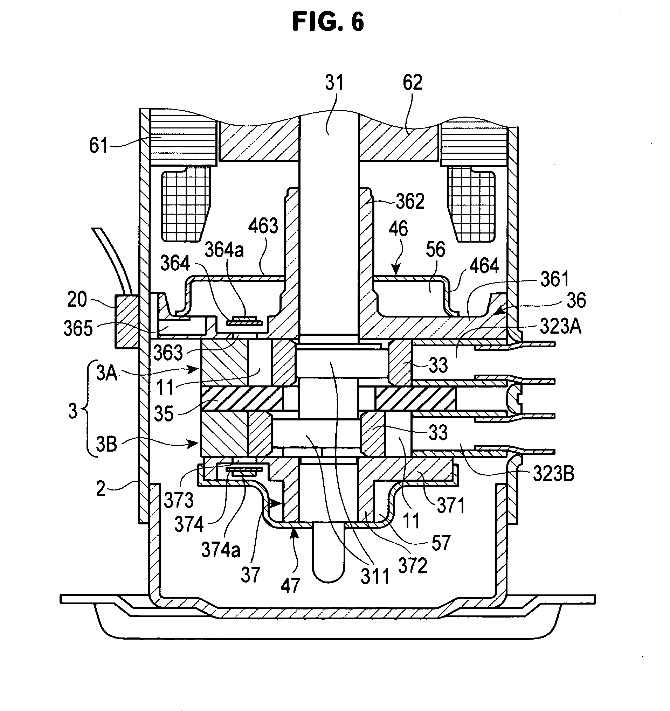

Next, a sixth embodiment of the present invention is explained with reference to FIG. 6. FIG. 6 is a partial sectional view of the lower part of a rotary compressor in accordance with the sixth embodiment of the present invention. In FIG. 6, the same reference symbols are applied to elements that are the same as those in FIG. 1A showing the first embodiment, and the detailed explanation thereof is omitted. The refrigeration cycle is the same as that in the first embodiment shown in FIG. 1C.

As shown in FIG. 6, in the sixth embodiment, a bearing end plate discharge passage 365 one end of which is open to the upper muffler chamber 56 and the other end of which is open toward the inner peripheral surface of the closed container 2 as the upper muffler discharge hole 462 is provided in the end plate part 361 of the upper bearing so that the refrigerant discharged from the upper muffler chamber 56 is sprayed directly onto the inner peripheral surface of the closed container 2. Further, the discharge temperature sensor 20 is mounted on the outer peripheral surface of the closed container 2 opposed to the sprayed portion.

Thereby, an opening can be provided close to the inner peripheral surface of the closed container 2 without providing the upper muffler discharge hole 462 in the body of the upper muffler cover 46, so that the degree of superheat of intake refrigerant can be kept proper with high accuracy.

The compressor described in the first to sixth embodiments is a two-cylinder type rotary compressor provided with two compression sections. However, the present invention is not limited to this type, and can be applied to one-cylinder type rotary compressor provided with one compression section.

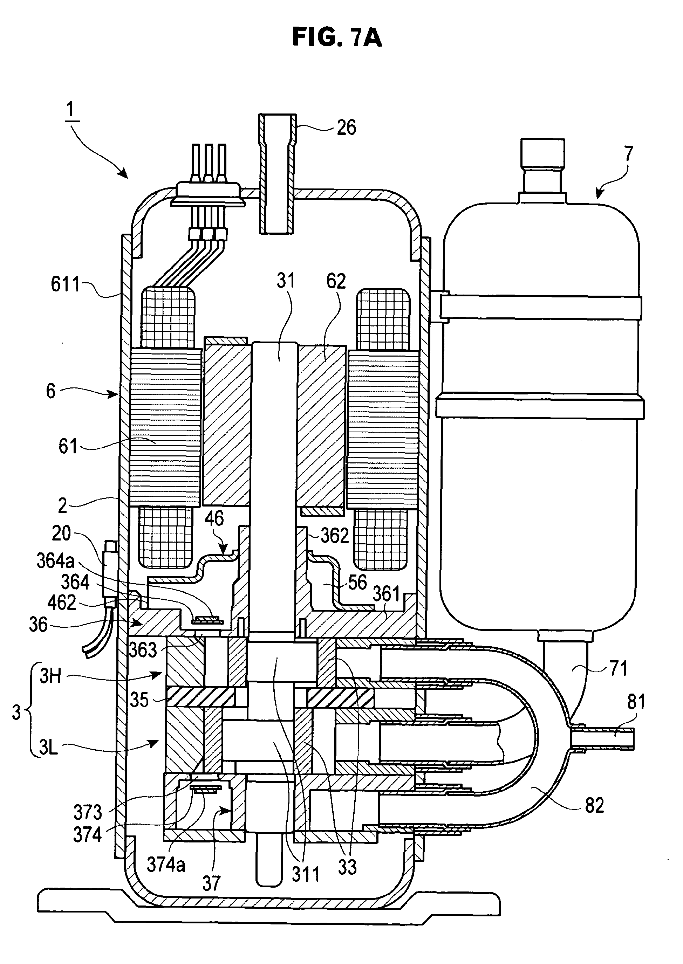

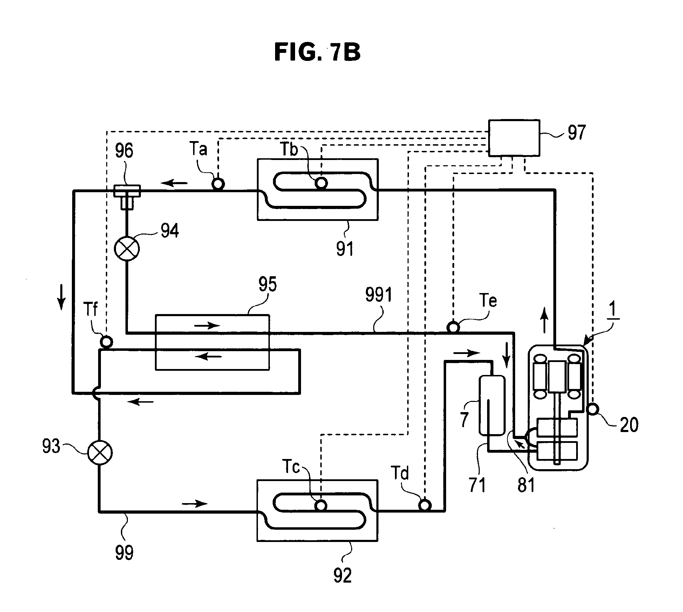

Next, a seventh embodiment of the present invention is explained with reference to FIGS. 7A and 7B. FIG. 7A is a general sectional view of a rotary compressor in accordance with the seventh embodiment of the present invention, and FIG. 7B is a configuration diagram of a refrigeration cycle in accordance with the seventh embodiment of the present invention. In FIG. 7A, the same reference symbols are applied to elements that are the same as those in FIG. 1A showing the first embodiment, and the detailed explanation thereof is omitted.

As shown in FIG. 7A, the compressor 1 of the seventh embodiment is a rotary compressor provided with two compression sections like the compressor of the first embodiment. Herein, points different from the compressor of the first embodiment are explained.

The compressor of the first embodiment has two compression sections connected in parallel with respect to the flow of refrigerant. By contrast, the compressor 1 of the seventh embodiment has two compression sections 3L and 3H connected in series with respect to the flow of refrigerant by connecting the discharge side of the low stage side compression section 3L to the suction side of the high stage side compression section 3H by using an intermediate interconnection pipe 82.

The suction side of the low stage side compression section 3L is connected to the accumulator 7 via the low-pressure suction pipe 71. Thereby, the low-pressure refrigerant sucked into the low stage side compression section 3L after passing through the accumulator 7 is compressed to an intermediate pressure in the low stage side compression section 3L, then being sucked into the high stage side compression section 3H through the intermediate interconnection pipe 82, and is compressed from the intermediate pressure to a high pressure in the high stage side compression section 3H.

Further, the compressor 1 has an intermediate-pressure suction pipe 81, which is connected to an injection line 991, described later, to suck an intermediate-pressure injection refrigerant, in addition to the low-pressure suction pipe 71 for sucking the low-pressure refrigerant into the low stage side compression section 3L.

The intermediate-pressure suction pipe 81 is connected to the intermediate interconnection pipe 82 that connects the discharge side of the low stage side compression section 3L to the suction side of the high stage side compression section 3H. Thereby, the injection refrigerant is sucked into the high stage side compression section 3H bypassing the low stage side compression section 3L.

In this two-stage compression type rotary compressor 1, the refrigerant compressed in the high stage side compression section 3H is discharged into the closed container 2 after passing through the upper muffler chamber 56, and further discharged to the outside of the closed container 2 through the discharge pipe 26 after passing through the surroundings of the motor 6.

The upper muffler discharge hole 462 is open toward the inner peripheral surface of the closed container 2 so that the refrigerant discharged from the upper muffler chamber 56 is sprayed directly toward the inner peripheral surface of the closed container 2. Further, the discharge temperature sensor 20 is mounted on the outer peripheral surface of the closed container 2 opposed to the sprayed portion.

The configuration of the upper muffler cover 46 is the same as that of the fifth embodiment. However, the upper muffler cover 46 may have the same configuration as that of the first to fourth embodiments or the sixth embodiment.

As shown in FIG. 7B, the refrigeration cycle in the seventh embodiment has a basic cycle formed by connecting the compressor 1, the condenser 91, the basic cycle expansion mechanism 93, and the evaporator 92 in succession by using the line 99. This basic cycle is provided with a temperature sensor Te for detecting the temperature of injection refrigerant and a temperature sensor Tf for detecting the refrigerant temperature on the outlet side of an internal heat exchanger 95 in addition to the temperature sensors Ta to Td having been explained with reference to FIG. 1C.

Since the operation in this basic cycle is the same as that in the refrigeration cycle of the first embodiment, the operation of gas injection relating to the seventh embodiment is explained below.

Some of the refrigerant is branched from the basic cycle as an injection refrigerant by a branch pipe 96 provided behind the outlet of the condenser 91, and is further decompressed by an injection expansion mechanism 94. The decompressed injection refrigerant is heat-exchanged with the branched refrigerant of basic cycle by the internal heat exchanger 95.

The injection refrigerant having enthalpy increased by the heat exchange in the internal heat exchanger 95 is injected into the intermediate-pressure suction pipe 81 through the injection line 991. At this time, the injection refrigerant is not gasified completely and some thereof is used as a liquid by controlling the throttle amount of the injection expansion mechanism 94, by which the compressor 1 is cooled to improve the compression efficiency of the compressor 1.

On the other hand, the enthalpy of refrigerant in the basic cycle is decreased by the heat exchange in the internal heat exchanger 95, and further the enthalpy thereof is increased by the evaporator 92 after the refrigerant has been decompressed by the basic cycle expansion mechanism 93. In this state, the refrigerant in the basic cycle is sucked into the low-pressure suction pipe 71 after passing through the accumulator 7 of the compressor 1.

In this cycle using gas injection, as compared with the cycle without gas injection shown in the first embodiment, the heat releasing capacity is increased by the increase in refrigerant circulation flow rate in the condenser 91, and the heat absorbing capacity is increased by the decrease in enthalpy of the refrigerant at the evaporator inlet in the evaporator 92, by which the capacity as the refrigeration cycle is increased.

In the case where the evaporator 92 is arranged in an indoor unit, the indoor air is cooled, so that the heat pump system serves as a cooler, and in the case where the condenser 91 is arranged in an indoor unit, the indoor air is heated, so that the heat pump system serves as a heater. Though not shown in FIG. 7B, if a line and a selector valve for exchanging the evaporator and the condenser for each other are added to the compressor 1, the internal heat exchanger 95 and the basic cycle expansion mechanism 93, the heat pump system can be used as a cooling and heating machine. Also, if the condenser 91 is heat-exchanged with water for hot-water supply, the heat pump system serves as a water heater.

Also, the heat pump system of this embodiment is provided with the control unit 97 for keeping the refrigerant in the refrigeration cycle in a proper state.

The control unit 97 sends a signal for detecting at least condenser refrigerant temperature, evaporator refrigerant temperature, compressor discharge temperature, and internal heat exchanger outlet temperature of injection refrigerant and controlling the throttle amount of the basic cycle expansion mechanism 93, the throttle amount of the injection expansion mechanism, and the number of revolutions of the compressor 1 to keep the refrigerant circulating amount of refrigeration cycle proper with respect to the capacity required in the heat pump system, and further to keep the state of refrigerant in the refrigeration cycle, that is, the degree of supercooling of refrigerant at the outlet of the condenser 91 in the refrigeration cycle, the degree of superheat of refrigerant in the low-pressure suction pipe 71 of the compressor 1, and the dryness or the degree of superheat of refrigerant in the intermediate-pressure suction pipe 81 proper.

In the present invention, the discharge temperature sensor 20 is mounted on the outer peripheral surface of the closed container 2 opposed to a portion in which the refrigerant compressed in the closed container 2 of the compressor 1 comes into contact with the closed container 2 before passing through the surroundings of the motor 6, by which the refrigerant temperature before heat exchange with the motor 6, that is, immediately after the discharge from the high stage side compression section 3H can be detected almost directly. Therefore, the throttle amount of the basic cycle expansion mechanism 93, the throttle amount of the injection expansion mechanism 94, and the number of revolutions of the compressor 1 can be controlled based on the detected temperature, and the dryness or the degree of superheat of refrigerant sucked into the high stage side compression section 3H of the compressor 1 can be kept more proper.

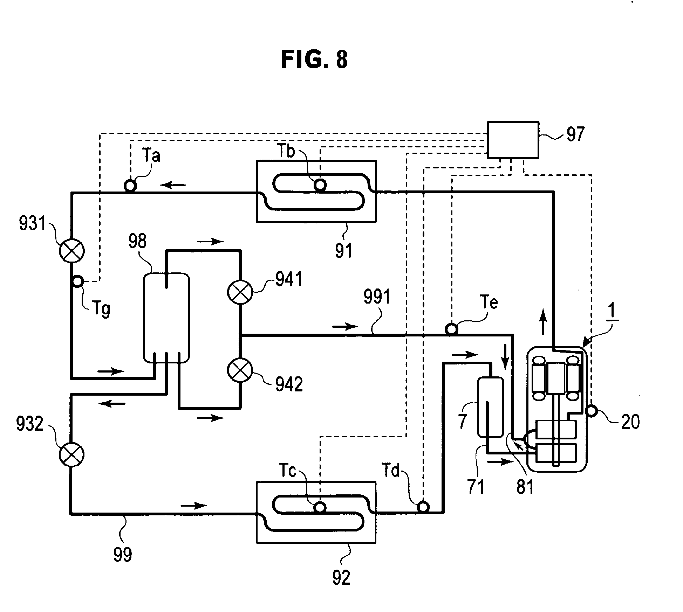

Next, an eighth embodiment of the present invention is explained with reference to FIG. 8. FIG. 8 is a configuration diagram of a refrigeration cycle in accordance with the eighth embodiment of the present invention. The compressor of this embodiment is the same as that of the seventh embodiment shown in FIG. 7A.

As shown in FIG. 8, the refrigeration cycle in the eighth embodiment has a basic cycle formed by connecting the compressor 1, the condenser 91, a first expansion mechanism 931, an intermediate-pressure gas-liquid separator 98, a second expansion mechanism 932, and the evaporator 92 in succession by using the line 99. In FIG. 8, reference symbol Tg denotes a temperature sensor for detecting the refrigerant temperature on the downstream side of the first expansion mechanism 931.

Since the operation in this basic cycle is the same as that in the refrigeration cycle of the first embodiment, the operation of gas injection relating to the eighth embodiment is explained below.

The refrigerant having become in a two-phase state by being decompressed to an intermediate pressure by the first expansion mechanism 931 is separated into a gas refrigerant and a liquid refrigerant by the intermediate-pressure gas-liquid separator 98. The gas refrigerant is injected into the intermediate-pressure suction pipe 81 of the compressor 1 as an injection refrigerant through the injection line 991.

At this time, an injection liquid flow control mechanism 942 is opened by a proper amount to mix the liquid refrigerant in some of the injection refrigerant, by which the compressor 1 is cooled to improve the compression efficiency of the compressor 1.

On the other hand, the enthalpy of liquid refrigerant in the intermediate-pressure gas-liquid separator 98 is increased by the evaporator 92 after the liquid refrigerant has been decompressed by the second expansion mechanism 932. Then, the liquid refrigerant is sucked into the low-pressure suction pipe 71 after passing through the accumulator 7 of the compressor 1.

In this gas injection cycle, as in the case of the internal heat exchange system, as compared with the cycle without gas injection, the heat releasing capacity is increased by the increase in refrigerant circulation flow rate in the condenser 91, and the heat absorbing capacity is increased by the decrease in enthalpy of the refrigerant at the evaporator inlet in the evaporator 92, by which the capacity as the refrigeration cycle is increased.

In the case where the evaporator 92 is arranged in an indoor unit, the indoor air is cooled, so that the heat pump system serves as a cooler, and in the case where the condenser 91 is arranged in an indoor unit, the indoor air is heated, so that the heat pump system serves as a heater. Though not shown in FIG. 8, if a line and a selector valve for exchanging the evaporator and the condenser for each other are added, the heat pump system can be used as a cooling and heating machine. Also, if the condenser 91 is heat-exchanged with water for hot-water supply, the heat pump system serves as a water heater.

Also, the heat pump system of this embodiment is provided with the control unit 97 for keeping the refrigerant in the refrigeration cycle in a proper state.

The control unit 97 sends a signal for detecting at least condenser refrigerant temperature, evaporator refrigerant temperature, compressor discharge temperature, and injection refrigerant temperature and controlling the throttle amount of the first expansion mechanism 931, the throttle amount of the second expansion mechanism 932, an injection gas refrigerant flow control mechanism 941, the injection liquid refrigerant flow control mechanism 942, and the number of revolutions of the compressor 1 to keep the refrigerant circulating amount of refrigeration cycle proper with respect to the capacity required in the heat pump system, and further to keep the state of refrigerant in the refrigeration cycle, that is, the degree of supercooling of refrigerant at the outlet of the condenser 91 in the refrigeration cycle, the degree of superheat of refrigerant in the low-pressure suction pipe 71 of the compressor 1, and the dryness or the degree of superheat of refrigerant in the intermediate-pressure suction pipe 81 proper.

In the present invention, the compressor 1 is the same as the compressor of the seventh embodiment, and the discharge temperature sensor 20 is mounted on the outer peripheral surface of the closed container 2 opposed to a portion in which the refrigerant before passing through the surroundings of the motor 6 comes into contact with the closed container 2, by which the refrigerant temperature before heat exchange with the motor 6, that is, immediately after the discharge from the high stage side compression section 3H can be detected almost directly. Therefore, the throttle amount of the first expansion mechanism 931, the throttle amount of the second expansion mechanism 932, the injection gas refrigerant flow control mechanism 941, the injection liquid refrigerant flow control mechanism 942, and the number of revolutions of the compressor 1 can be controlled based on the detected temperature, and the dryness or the degree of superheat of refrigerant sucked into the high stage side compression section 3H of the compressor 1 can be kept more proper.

## Claims

1. A rotary compressor comprising:
a cylindrical closed container arranged vertically;
a motor provided in an upper part of the closed container; and
a compression section which is provided in a lower part of the closed container and is driven by a shaft fixed to a rotor of the motor,
the compression section having:
a cylinder provided with a compression chamber therein;
an upper bearing and a lower bearing each of which is fixed to the cylinder and has an end plate part for closing the end surface of the compression chamber and a bearing part for rotatably supporting the shaft;
a compression section discharge hole which is provided in the end plate part of the upper bearing and is open to the compression chamber;
an upper muffler cover which is fixed on the upper side of the end plate part of the upper bearing and forms an upper muffler chamber by covering the compression section discharge hole;
an upper muffler discharge hole which is provided in the upper muffler cover and is open to the closed container; and
a discharge pipe which is provided in an upper end part of the closed container to discharge a refrigerant in the closed container to the outside of the closed container, wherein
a discharge temperature sensor for detecting the temperature of compressed refrigerant is provided on the outer peripheral surface of the closed container approximately at the height at which the upper muffler discharge hole is positioned.

2. The rotary compressor according to claim 1, wherein
the upper muffler cover has a horizontal end plate part, a vertical side plate part, and an upper muffler discharge hole which is provided in the side plate part and is open toward the inner peripheral surface of the closed container; and
a discharge temperature sensor for detecting the temperature of compressed refrigerant is provided on the outer peripheral surface of the closed container opposed to the upper muffler discharge hole.

3. The rotary compressor according to claim 1, wherein
the upper muffler cover has a horizontal end plate part, a vertical side plate part, and a cut and raised part which is provided in the end plate part and is open toward the inner peripheral surface of the closed container as an upper muffler discharge hole; and
a discharge temperature sensor for detecting the temperature of compressed refrigerant is provided on the outer peripheral surface of the closed container opposed to the upper muffler discharge hole.

4. The rotary compressor according to claim 1, wherein
the upper muffler cover has an upper muffler pipe which is fixed to the upper muffler cover and one end of which is open to the upper muffler chamber and the other end of which is open toward the inner peripheral surface of the closed container as an upper muffler discharge hole; and
a discharge temperature sensor for detecting the temperature of compressed refrigerant is provided on the outer peripheral surface of the closed container opposed to the upper muffler discharge hole.

5. The rotary compressor according to claim 1, wherein
the upper muffler cover has a horizontal end plate part, a vertical side plate part, a projecting part provided in the side plate part so as to be close to the inner peripheral surface of the closed container, and an upper muffler discharge hole which is provided in the projecting part and is open toward the inner peripheral surface of the closed container; and
a discharge temperature sensor for detecting the temperature of compressed refrigerant is provided on the outer peripheral surface of the closed container opposed to the upper muffler discharge hole.

6. The rotary compressor according to claim 1, wherein
the end plate part of the upper bearing has a bearing end plate discharge passage one end of which is open to the upper muffler chamber and the other end of which is open toward the inner peripheral surface of the closed container as an upper muffler discharge hole; and
a discharge temperature sensor for detecting the temperature of compressed refrigerant is provided on the outer peripheral surface of the closed container opposed to the upper muffler discharge hole.

7. The rotary compressor according to any one of claims 1 to 6, wherein the number of revolutions of the rotary compressor is variable.

8. The rotary compressor according to any one of claims 1 to 7, wherein the compression section has a low stage side compression section arranged on the lower side, a high stage side compression section arranged on the upper side, an intermediate interconnection passage which connects the discharge side of the low stage side compression section to the suction side of the high stage side compression section, a low-pressure suction pipe connected to the suction side of the low stage side compression section, and an intermediate-pressure suction pipe connected to the intermediate interconnection passage.

9. A heat pump system comprising a refrigeration cycle in which a compressor, a condenser, an expansion mechanism, and an evaporator are connected in succession by a line; and a control unit which detects the temperatures of a plurality of locations of the refrigeration cycle and controls the number of revolutions of the compressor and the throttle amount of the expansion mechanism, wherein
the rotary compressor described in any one of claims 1 to 7 is used as the compressor; and
based on the temperature detected by a discharge temperature sensor provided on the outer peripheral surface of a closed container of the compressor, the throttle amount of the expansion mechanism and the number of revolutions of the compressor are controlled, and the degree of superheat of a refrigerant sucked into the compressor is kept proper.

10. A heat pump system provided with a gas injection cycle, which comprises a basic refrigeration cycle in which a compressor, a condenser, a basic cycle expansion mechanism, and an evaporator are connected in succession by a line; a branch pipe which branches some of a high-pressure refrigerant behind the outlet of the condenser from the basic refrigeration cycle as an injection refrigerant; an injection expansion mechanism which decompresses the injection refrigerant to an intermediate pressure between the pressure of the condenser and the pressure of the evaporator; an internal heat exchanger which heat-exchanges the decompressed injection refrigerant with the branched high-pressure refrigerant of basic refrigeration cycle; an injection line which sucks the injection refrigerant, having been subjected to the heat exchange, during the compression process of the compressor; and a control unit which detects the temperatures of a plurality of locations of the refrigeration cycle and controls the number of revolutions of the compressor, the throttle amount of the basic cycle expansion mechanism, and the throttle amount of the injection expansion mechanism, wherein
the rotary compressor described in claim 8 is used as the compressor, the discharge pipe of the compressor is connected to the condenser, the low-pressure suction pipe of the compressor is connected to the evaporator, and the intermediate-pressure suction pipe of the compressor is connected to the injection line; and
based on the temperature detected by a discharge temperature sensor provided on the outer peripheral surface of a closed container of the compressor, the throttle amount of the injection expansion mechanism and the number of revolutions of the compressor are controlled, and the degree of superheat or the dryness of a refrigerant sucked into the intermediate-pressure suction pipe of the compressor is kept proper.

11. A heat pump system provided with a gas injection cycle, which comprises a basic refrigeration cycle configured by connecting a compressor, a condenser, a first expansion mechanism, an intermediate-pressure gas-liquid separator, a second expansion mechanism, and an evaporator in succession by a line; an injection pipe which branches a gas refrigerant separated by the intermediate-pressure gas-liquid separator from the basic refrigeration cycle as an injection refrigerant and sucks the injection refrigerant during the compression process of the compressor; and a control unit which detects the temperatures of a plurality of locations of the refrigeration cycle and controls the number of revolutions of the compressor, the throttle amount of the first expansion mechanism, and the throttle amount of the second expansion mechanism, wherein
the rotary compressor described in claim 8 is used as the compressor, the discharge pipe of the compressor is connected to the condenser, the low-pressure suction pipe of the compressor is connected to the evaporator, and the intermediate-pressure suction pipe of the compressor is connected to the injection line; and
based on the temperature detected by a discharge temperature sensor provided on the outer peripheral surface of a closed container of the compressor, the throttle amount of the first expansion mechanism, the throttle amount of the second expansion mechanism, and the number of revolutions of the compressor are controlled, and the degree of superheat or the dryness of a refrigerant sucked into the intermediate-pressure suction pipe of the compressor is kept proper.
